(19) Europäisches Patentamt
European Patent Office
Office européen des brevets

(11) Veröffentlichungsnummer: **0 245 603**
**B1**

(12) # EUROPÄISCHE PATENTSCHRIFT

(45) Veröffentlichungstag der Patentschrift: **07.11.90**

(51) Int. Cl.⁵: **C07C 317/36**

(21) Anmeldenummer: **87103346.0**

(22) Anmeldetag: **30.01.85**

(60) Veröffentlichungsnummer der früheren Anmeldung nach Art. 76 EPÜ: **0153599**

(54) **Aromatische Aminosulfonverbindungen und Verfahren zu deren Herstellung.**

(30) Priorität: **11.02.84 DE 3404856**
**31.10.84 DE 3439756**

(43) Veröffentlichungstag der Anmeldung: **19.11.87 Patentblatt 87/47**

(45) Bekanntmachung des Hinweises auf die Patenterteilung: **07.11.90 Patentblatt 90/45**

(84) Benannte Vertragsstaaten: **BE CH DE FR GB IT LI NL**

(56) Entgegenhaltungen:
**EP-A- 0 021 105**
**EP-A- 0 171 611**

(73) Patentinhaber: **BAYER AG, D-5090 Leverkusen 1 Bayerwerk(DE)**

(72) Erfinder: **Jäger, Horst, Dr., Carl-Rumpff-Strasse 37, D-5090 Leverkusen 1(DE)**
Erfinder: **Harms, Wolfgang, Dr., Walter-Flex-Strasse 21, D-5090 Leverkusen 1(DE)**
Erfinder: **Herd, Karl Josef, Dr., Am Gartenfeld 66, D-5068 Odenthal(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Gegenstand der Erfindung sind neue Aminoverbindungen der Struktur

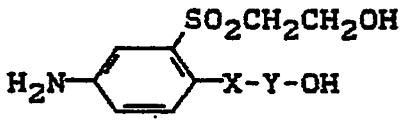

(I)

worin
X = $NR_3$, O, S
$R_3$ = H, $C_1$-$C_4$-Alkyl,
Y = $C_2$-$C_6$-Alkylen gegebenenfalls durch Heteroatome in der Alkylenkette unterbrochen,
bevorzugt sind dabei Aminoverbindungen der Formel

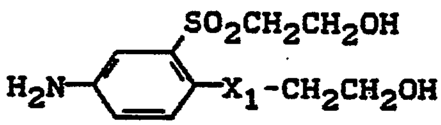

(II)

wobei
$X_1$ = NH, O, S bedeutet.

Ein Verfahren zur Herstellung von (I) besteht darin, daß man (2-Halogen-5-nitrophenyl) (β-hydroxyethyl)sulfone

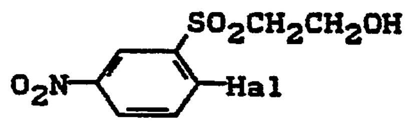

(III)

worin
Hal = F, Cl, Br, J
die durch Ethoxylierung von 2-Halogen-5-nitrobenzolsulfinsäuren unter neutralen wäßrigen Bedingungen zugänglich sind, mit Verbindungen der Struktur HX-Y-OH (IV) in der Wärme, gegebenenfalls unter Druck, unter H-Hal-Abspaltung umsetzt und die dabei resultierenden Nitrosulfone der Formel

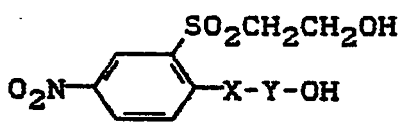

(V)

anschließend, gegebenenfalls ohne Zwischenisolierung,zu (I) reduziert. Die Reduktion von (V) zu (I) ist ebenfalls Gegenstand der Erfindung.

Die Kondensation mit den nucleophilen Reaktionspartnern (IV) führt man oberhalb 70°C, am vorteilhaftesten zwischen 75 bis 120°, gegebenenfalls unter Druck, durch. Als Reaktionsmedium kann Wasser, ein organisches wassermischbares Lösungsmittel, z.B. ein Alkohol, DMF, DMSO oder eine Mischung aus beiden dienen. Bei einem Überschuß an HX-Y-OH kann auch auf ein Lösungsmittel verzichtet werden. Zum Abfangen des freiwerdenden Halogenwasserstoffs kann eine Hilfsbase, beispielsweise ein tertiäres Amin, insbesondere ein Trialkylamin wie Triethylamin, Natriumhydrogencarbonat oder Soda zugesetzt werden oder aber man verwendet beim Einsatz von $HNR_3$-Y-OH die etwa zweifach äquimolare Menge an diesem Hydroxyalkylamin.

Die aschließende Reduktion kann katalytisch, (z.B. Wasserstoff/Katalysator), mit Metall/Säure (z.B. Eisen/Essigsäure) oder mit anderen für aromatische Nitroverbindungen üblichen Reduktionsmitteln erfolgen.

Ein weiteres Verfahren besteht darin, daß man die Alkalisalze der 2-Halogen-5-nitrobenzolsulfinsäure mit Verbindungen HX-Y-OH oberhalb 80°C in wäßrigem Reaktionsmedium, gegebenenfalls unter Druck, kondensiert und die Kondensationsprodukte

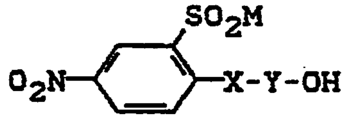

(VI)

M = Li, Na, K

mit Ethylenoxid oder Chlorethanol in der Wärme und unter Druck und neutralen Bedinungen alkyliert. Um den pH-Wert dabei konstant zu halten, wird kontinuierlich eine anorganische Säure, z.B. Schwefelsäure, zudosiert oder aber die Reaktion in phophatgepufferter Lösung durchgeführt. Die entsprechenden Nitrosulfone (V) werden dann, wie im ersten Darstellungsverfahren aufgeführt, zu den entsprechenden Aminoverbindungen (I) reduziert.

Die Verbindungen (V) sind auch herstellbar, indem man o-substituierte Sulfone der Formel

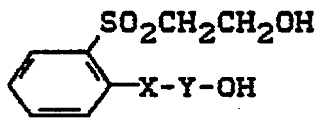

(VII)

zweifach O- und gegebenenfalls N-acyliert, mit Schwefelsäure/Salpetersäure unter relativ schonenden Bedingungen nitriert und abschließend unter saurer Hydrolyse entacyliert (vgl. US-Patent 2 784 204).

Die neuen Verbindungen eignen sich beispielsweise zur Herstellung von Farbstoffen der Triphendioxazin-Reihe.

Die Herstellung solcher Farbstoffe erfolgt beispielsweise durch Kondensation von (I) mit 1,4-Benzochionenen der Formel

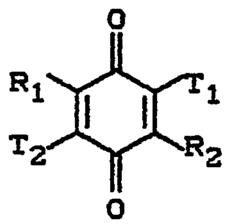

(VIII)

worin

$T_1$ und $T_2$ Wasserstoff, F, Cl, Br, O-Alkyl oder O-Aryl bedeuten und

$R_1$ und $R_2$ für Wasserstoff oder einen Substituenten stehen, beispielsweise F, Cl, Br, $C_1$-$C_4$-Alkyl, $C_1$-$C_4$-Alkoxy, Aryloxy, insbesondere gegebenenfalls substituiertes Phenoxy, Acylamino, insbesondere $C_1$-$C_4$-Alkyl-carbonylamino und gegebenenfalls substituiertes Phenylcarbonylamino, Acetyl- oder Benzoylamino sowie gegebenenfalls substituiertes Carbonamido,

zu Verbindungen der Formel

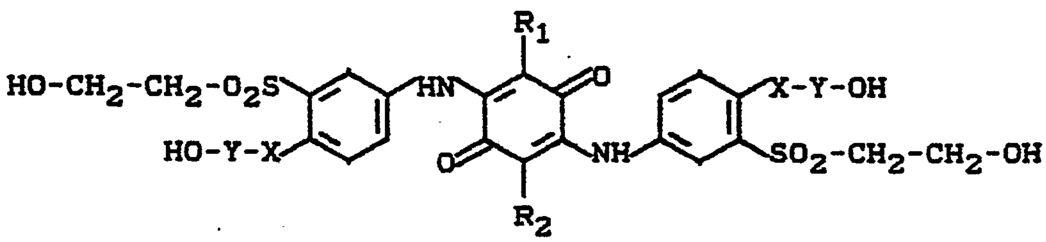

(IX)

worin

$R_1$, $R_2$, X und Y die oben angegebene Bedeutung haben

und anschließenden Ringschluß in saurem, vorzugsweise stark saurem Medium, wobei die entsprechenden Verbindungen mit den Gruppen -X-Y-$OSO_3H$ und -$SO_2CH_2CH_2OSO_3H$ entstehen, welche nach bekannten Verfahren in die Gruppe -$SO_2$-CH=$CH_2$ bzw. -$SO_2$-$CH_2CH_2SSO_3H$ und -$SO_2CH_2CH_2$-$OPO_3H_2$ umgewandelt werden können.

Der Ringschluß der Kondensationsprodukte (IX) kann beispielsweise nach Methoden, wie sie in den Deutschen Offenlegungsschriften 2 122 262, 2 124 080, 2 302 382, 2 344 782, 2 503 611, 2 823 828 und in der Britischen Patentschrift 2 019 872 beschrieben sind, erfolgen insbesondere in konzentrierter Schwefelsäure oder vor allem in Oleum mit $SO_3$-Konzentrationen von 1-50 %, bei Temperaturen von 10-80°, gegebenenfalls besonders vorteilhaft unter Zusatz von Oxidationsmitteln wie Kalium- oder Ammoniumperoxidisulfat oder organischen Peroxiden.

Derartige Farbstoffe finden Verwendung als wasserlösliche Reaktivfarbstoffe für das Färben von hydroxyl- und amidgruppenhaltigen Textilmaterialien.

Beispiel 1

20,0 g eines Chloranilkondensationsproduktes der Formel

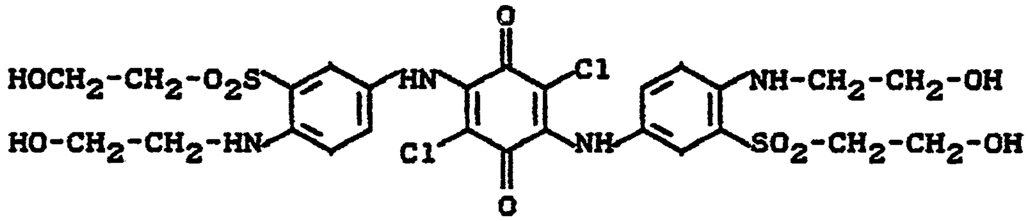

werden bei 10-20° in 50 ml 20 %iges Oleum innerhalb etwa einer Stunde eingetragen. Zur vollständigen Lösung rührt man 30 bis 60 Minuten nach und trägt dann in die dickflüssige Masse 15,6 g Kaliumperoxydisulfat in etwa 45 Minuten bei 20 bis 25° unter leichter Außenkühlung ein. 30 Minuten nach dem Eintragen ist die Reaktion beendet. Man rührt das Reaktiosgemisch in 400 g Eis ein, läßt dan zu der entstandenen blauen Lösung zunächst 2,5 g Trinatriumphosphat in 20 ml Wasser und anschließend etwa 460 ml 4 n Natronlauge unter Kühlung und gutem Rühren zutropfen, bis ein pH-Wert von 4,5 bis 5,0 erreicht ist. Der in Form eines breiigen Niederschlages ausgefallene Farbstoffe wird abgesaugt, mit Natriumchoridlösung gewaschen und bei 50° im Umluftschrank getrocknet. Der Farbstoff entspricht der Formel

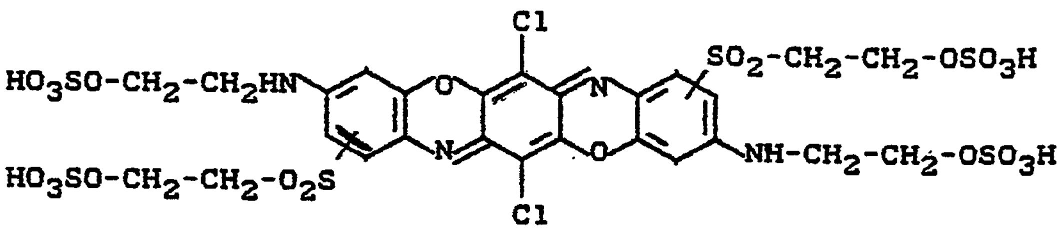

C.I. Indicator Number 13

Er färbt Baumwolle aus langer Flotte bei 40 bis 60° in kräftigen, etwas rotstichigen Blautönen mit ausgezeichneten Echtheitseigenschaften.

Das zu Beginn des Beispiels 1 eingesetzte Chloranil-Kondensationsprodukt wird auf folgende Weise hergestellt:
35 g 5-Nitro-2-β-hydroxyethylaminophenyl-β-hydroxyethylsulfon werden in 200 ml Methanol suspendiert (Autoklav). Nach Zusatz von 2 g Raney-Nickel drückt man 10 bis 20 bar Wasserstoff auf und heizt auf 45°, bis nach weiterem Aufdrücken von Wasserstoff kein Verbrauch mehr erfolgt. Man filtriert die erhaltene Lösung oder Suspension bei 50° vom Nickel ab, wäscht mit Wasser wenig nach und setzt zu dem Filtrat 14,4 g 2,3,5,6-Tetrachlorchinon und 16 g wasserfreies Natriumacetat. Die Mischung wird nun unter Rückfluß 2 Stunden erhitzt, bis kein Tetrachlorchinon mehr nachweisbar ist. Das in Form eines braunen Niederschlages ausgefallene Kondensationsprodukt wird abgesuagt, mit Methanol oder Methanolwasser gewaschen und bei 60° im Umluftschrank getrocknet.

Man kann die nach der katalytischen Reduktion erhaltene Methanollösung auch eindampfen, das zurückbleibende 5-Amino-2-β-hydroxyethylaminophenyl-β-hydroxyethylsulfon in Wasser lösen und bei 45° mit dem Chloranil kondensieren, wobei man den pH-Wert mit 2n-Sodalösung auf 5,5 bis 5,8 hält. Die Kondensation ist unter diesen Bedingungen nach etwa einer Stunde beendet. Man saugt den ebenfalls ausgefallenen braunen Niderschlag ab und wäscht ihn mit Wasser.

Beispiel 2

Führt man in Beispiel 1 den oxidativen Ringschluß statt mit 50 ml 20 %igem Oleum bei 20 bis 25° ohne Zuhilfenahme von Peroxydisulfat in 30 %igem Oleum bei 50° aus, so erhält man nach Isolierung aus dem Reaktionsgemisch einen ähnlichen Farbstoff, der Cellulosefasern in blauen Farbtönen färbt.

Weitere ähnliche blaue Farbstoffe mit der C.I. Indicator Number 13 erhält man, wenn man die nachfolgender Tabelle aufgeführten 5-Amino-2-(hydroxyalkylamino)-phenyl-β-hyroxyethylsulfone (I) mit den angegebenen 1,4-Benzochinonen (VIII) kondensiert und die Kondensationsprodukte in der beschriebenen Weise cyclisiert und sulfatiert.

| Ausgangsverbindungen I | Benzochinon VIII |
|---|---|
| 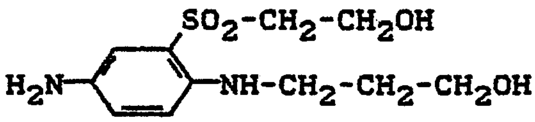 | 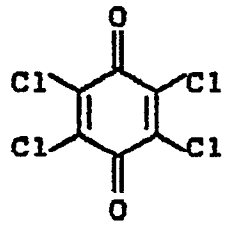 |
| 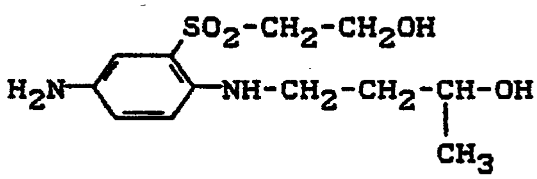 | 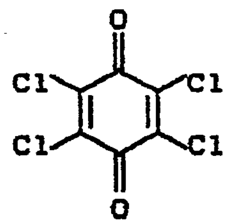 |
| 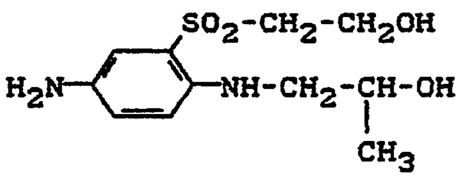 | 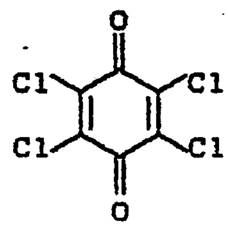 |
| 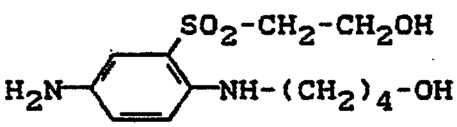 | 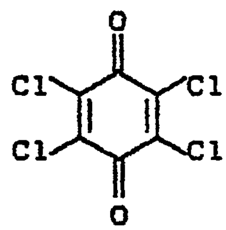 |
| 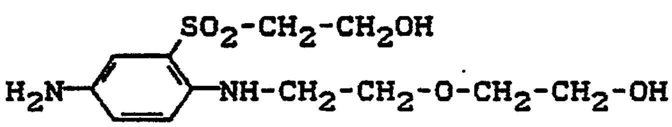 | 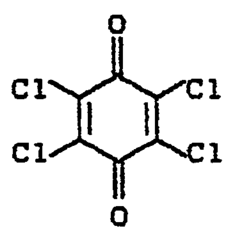 |
| 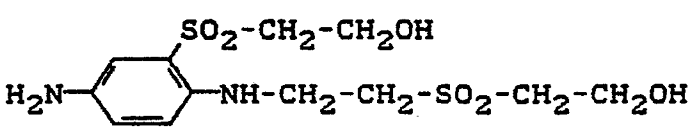 | 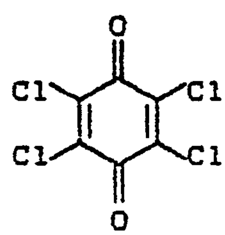 |

| Ausgangsverbindungen I | Benzochinon VIII |
|---|---|
| 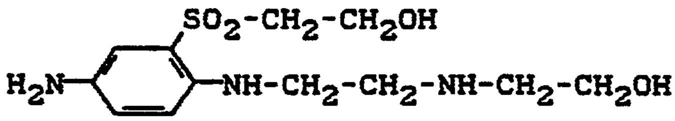 | 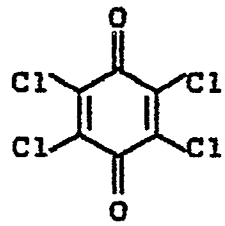 |
| 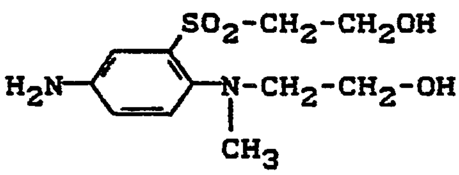 | 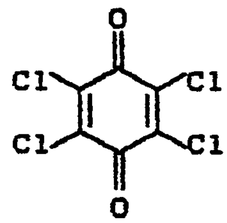 |
| 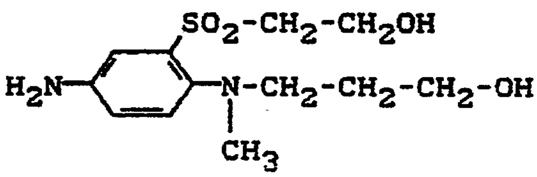 | 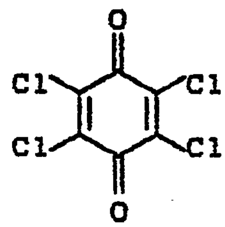 |
| 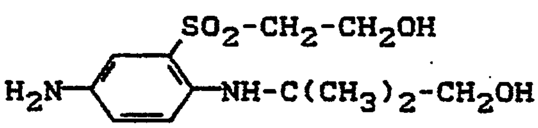 | 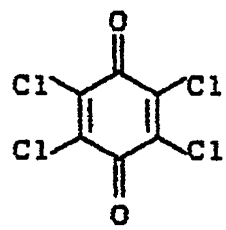 |
| 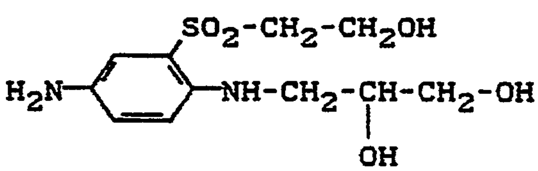 | 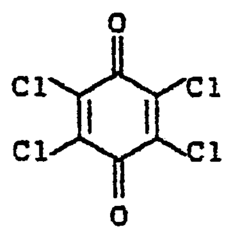 |
| 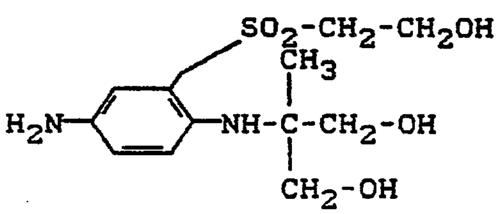 | 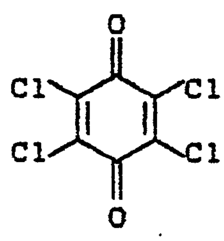 |

| Ausgangsverbindungen I | Benzochinon VIII |
| --- | --- |
| 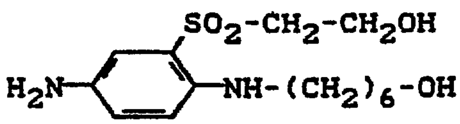 | 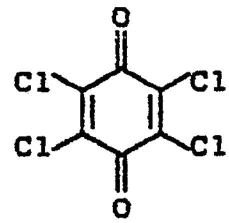 |
| 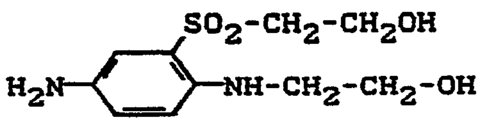 | 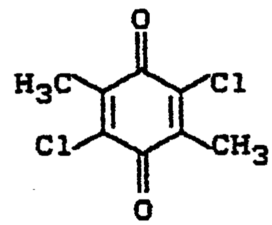 |
| 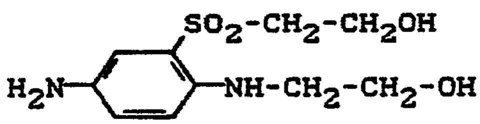 | 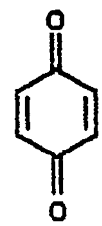 |
| 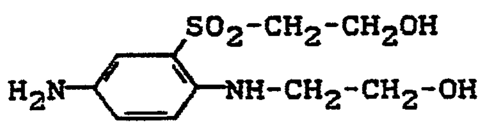 | 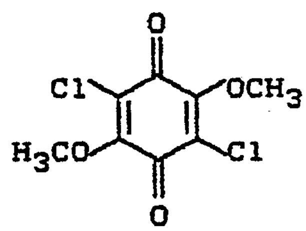 |
| 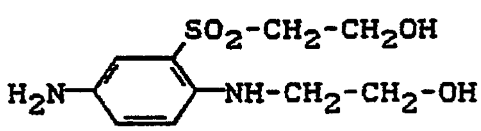 | 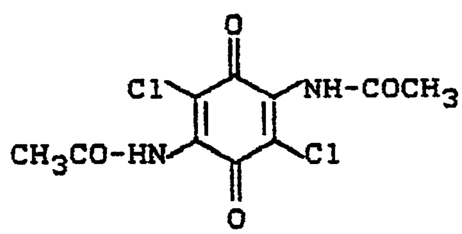 |
| 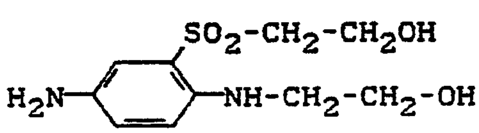 | 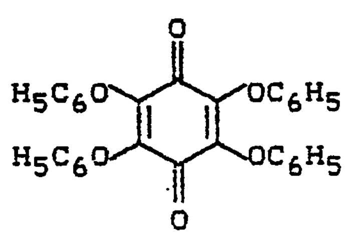 |

| Ausgangsverbindungen I | Benzochinon VIII |
|---|---|
| 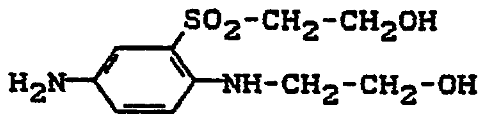 | 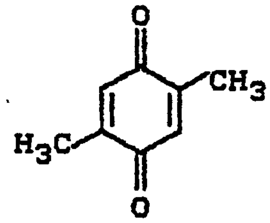 |
| 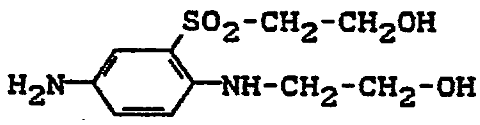 | 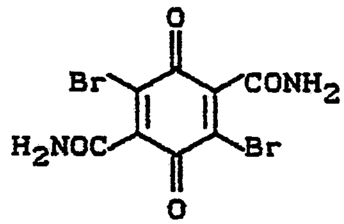 |
| 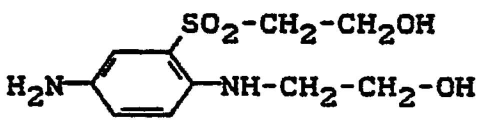 | 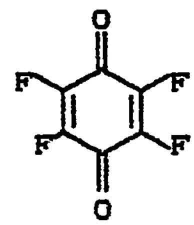 |
| 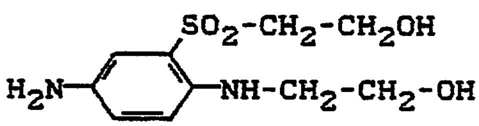 | 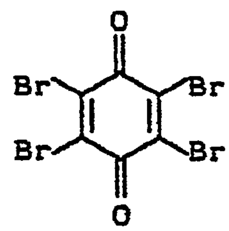 |

Beispiel 3

[5-amino-2-(2-hydroxyethyl)aminophenyl](2-hydroxyethyl)-sulfon

209 g feuchte Paste an Natrium-2-chlor-5-nitrobenzolsulfinat (58,4 %ig) werden in 250 ml Wasser gelöst. Der pH sollte zwischen 7 und 8 liegen. Das Reaktionsgefäß wird mit Stickstoff gespült, und die Lösung dabei auf 60° erwärmt. Unter Einhaltung der vorgeschriebenen Sicherheitsbestimmungen wird bei pH 7-9 und geschlossenem Reakttionsgefäß langsam Ethylenoxid eingeleitet und 25 %ige Schwfelsäure zudosiert. Es werden insgesamt 110 bis 120 g Ethylenoxid und ca. 204 g Schwefelsäure zur pH-Steuerung verbraucht. Sobald kein Ausgansgmaterial mehr nachweibar ist, wird bei pH 7 eine Stunde auf 85°C erwärmt. Nach dem Abkühlen auf Raumtemperatur wird abgesaugt, mit ca. 200 ml Wasser nachgewaschen und im Vakuum bei 70°C getrocknet. Es werden 118 g kristallines (2-Chlor-5-nitrophenyl) (2-hydroxyethyl)sulfon isoliert.

93 g (2-Chlor-5-nitrophenyl)(2-hydroxyethyl)sulfon werden in 84 ml Isopropanol zum Sieden erhitzt. Unter verminderter Wärmezufuhr werden innerhalb von 15 Minuten 50 g Ethanolamin zulaufen lassen. Die resultierende dickflüssige Lösung wird eine weitere Stunde unter Rückfluß erhitzt. Danach ist die Reaktion beendet und die Lösung des [2-(2-Hydroyethyl)amino-5-nitrophenyl]-(2-hydroxyethyl)sulfons kann direkt katalytisch hydriert werden. Zur Isolierung des Substitutionsproduktes fügt man bei 95-80°C 250 ml Wasser und 100 g Eis zu. Es wird 2 Stunden nachgerührt und mit 12 ml Salzsäure auf pH 6 gestellt. Das kristallin ausgefallene Produkt wird abgesaugt und getrocknet. Die Ausbeute an [2-(2-Hydroxethyl)amino-5-nitro-phenyl](2-hydroxyethyl)sulfon (Schmelzpunkt 118°C) beträgt 98,5 g.

$^1H$-NMR: τ = 1,59 (d,1H); 1,75 (dd,1H); 2,69 (t,NH);
2,97 (d,1H); 5,04 (t,OH); 5,13 (t,OH);
6,26 (m,2H); 6,35 (m,2H); 6,48 (m,2H);
6,57 (m,2H).

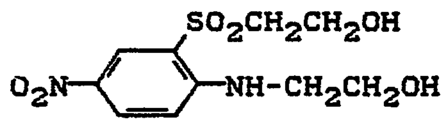

(Alle in dieser Anmeldung aufgeführten $^1H$-NMR-Daten wurden in $d_6$-DMSO als Lösungsmittel bei TMS als innerem Standard ermittelt).

Das obige zwischenisolierte Aminonitrosulfon kann, wie unter Beispiel 1 beschrieben, katalytisch hydriert werden. Günstiger ist es aber - wie oben bereits angedeutet - die Reaktionslösung der Ethanolamin-Substitution direkt, d.h. ohne Zwischenisolierung des [2-(2-Hydroxyethyl)amino-5-nitrohphenyl](2-hydroxyethyl)-sulfon, zur reduzieren. Dazu verdünntman mit 100 ml Isopropanol, fügt 5 g Raney-Nickel zu, erwärmt auf 60°C und drückt ca.2 4 1 Wasserstoff auf. Der Wasserstoffdruck sollte im Bereich von 7-10 bar gehalten werden. Wenn nach ca. 2,5 Stunden der Verbrauch langsam abfällt, kann die Temperatur auf 75°C gesteigert werden. Nach Reaktionsende wird mit 200 ml 70°C heißem Wasser verdünnt und die warme Reaktionslösung vom Katalysator abgetrennt. Die erhaltene dunkle Lösung des [5-Amino-2-(2-hydroxy-ethyl)-aminophenyl](2-hydroxyethyl)sulfons wird direkt mit Chloranil weiter umgesetzt (s. Beispiel 1).

Zur Isolierung und Charakterisierung des Reduktionsproduktes wird die warme Lösung bis auf 200 ml aufkonzentriert, auf 20°C abgekühlt, und das kristalline Produkt abgesaugt. Nach dem Trocknen bei 70°C im Vakuum resultieren 84 g [5-Amino-2-(2-hydroxethyl)aminophenyl]-2-hydroxyethyl)sulfon (Schmelzpunkt 130°C).

$^1H$-NMR: τ = 3,10 (d,1H); 3,22 (dd,1H); 3,37 (d,1H);
4,45 (t,NH); 5,20 (t,OH); 5,27 (t,OH);
5,32 (s,$NH_2$); 6,40 (m,4H); 6,65 (t,2H);
6,90 (m,2H).

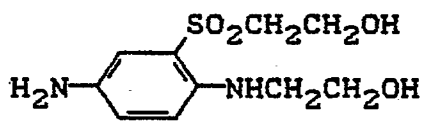

Das als Zwischenprodukt benötigte [2-(2-Hydroxyethyl)-amio-5-nitrophenyl](2-hydroxyethyl)sulfon kann auch folgendermaßen hergestellt werden:

A) Die Lösung von 122 g Natrium-2-chlor-5-nitrobenzolsulfinat in 300 ml Wasser wird mit 100 g Ethanolamin versetzt und 4 Stunden im Autoklaven bei 110°C und 0,5 bar gerührt. Die erkaltete gelbe Reaktionslösung wird mit Salzsäure neutralisiert und mit 90 g Kochsalz ausgesalzen. Man erhält 215 g feuchte Paste an Natrium-2-(2-Hydroxyethyl)amino-5-nitrobenzolsulfinat.

B) 122 g Natrium-2-chlor-5-nitrobenzolsulfinat werden mit 150 g Ethanolamin verknetet und langsam auf 100°C erwärmt. Nach weiteren 30 Minuten bei 100°C versetzt man mit 500 ml Wasser, neutralisiert die Reaktionslösung mit Salzsäure und isoliert die Reaktionslösung mit Salzsäure und isoliert das Natrium-2-(2-hydroxyethyl)amino-5-nitrobenzolsulfinat wie oben durch Aussalzen.

Die 215 g fechte Paste des Sulfinats werden in 250 ml Wasser gelöst und analog dem Natrium-2-chlor-5-nitrobenzolsulfinat mit 120 g Ethylenoxid und ca. 200 g 25 %iger Schwefelsäure bei 60°C unter Druck alkyliert. Es werden 121 g kristallines blaßgelbes [2-(2-Hydroxyethyl)amino-5-nitrophenyl](2-hydroxyethyl)sulfon erhalten.

Verwendet man wie in Beisiel 3 anstelle von Ethanolamin die entsprechenden anderen Hydroxyalkylamine, so lassen sich folgende Nitroamino-bzw. Diaminosulfone herstellen:

Beispiel 4

[2-(2-Hydroxyethyl)methylamino-5-nitrohenyl](2-hydroxyethyl)sulfon (blaßgelb, Schmelzpunkt 106°C).

$^1H$-NMR: τ = 1,41 (d,1H); 1,63 (dd,1H); 2,41 (d,1H);
5,30 (t,OH); 5,39 (t,OH); 6,20 (t,2H);
6,37 (m,4H); 6,70 (t,2H); 7,08 (s,$CH_3$).

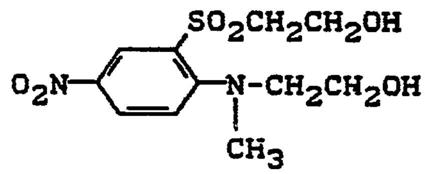

[5-Amino-2-(2-hydroxyethyl)methylaminophenyl](2-hydroxyethyl)sulfon (kristallierendes Öl)

$^1$H-NMR: $\tau$ = 2,82 (d,1H); 2,96 (d,1H); 3,21 (dd,1H); 4,62 (s,$NH_2$); 5,25 (breites OH); 5.68 (breites OH); 6,25 (m,2H); 6,37 (m,2H); 6,50 (t,2H); 7,12 (t,2H); 7,42 (s,$CH_3$).

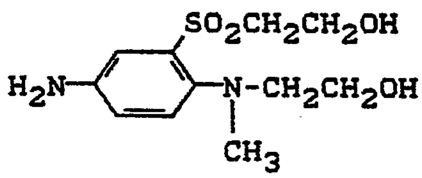

Beispiel 5

[2-(3-Hydoxypropyl)amino-5-nitrophenyl](2-hydroxyethyl)-sulfon (blaßgelb, Schmelzpunkt 65°C)

$^1$H-NMR: $\tau$ = 1,63 (d,1H); 1,18 (dd,1H); 2,72 (breites NH); 3,03 (d,1H); 5,07 (t,OH); 5,40 (t,OH); 6,25 (t,2H); 6,50 (m,6H); 8,20 (m,2H).

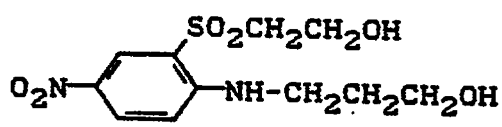

[5-Amino-2(3-hydroxypropyl)aminophenyl](2-hydroxyethylsulfon) (Öl, das kristallisiert).

$^1$H-NMR: $\tau$ = 3,12 (d,1H); 3,22 (dd,1H); 3,38 (d,1H); 4,65 (t,NH); 5,20 (breites OH); 5,31 (s,$NH_2$); 5,50 (breites OH); 6,37 (t,2H); 6,50 (t,2H); 6,68 (m,2H); 6,90 (m,2H); 8,40 (m,2H).

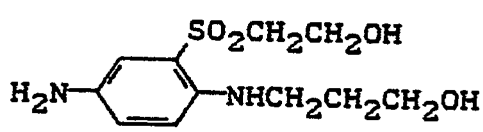

Beispiel 6

[2-(3′-(2″-Hydroxyethyl)methylaminopropyl)amino-5-nitrophenyl](2-hydroxyethyl)sulfon (gelbes Öl)

$^1$H-NMR: $\tau$ = 1,67 (d,1H); 1,82 (dd,1H); 2,63 (breites NH); 3,02 (d,1H); 5,10 (breites OH); 5,67 (breites OH); 6,30 (t,2H); 6,50 (m,4H); 6,62 (t,2H); 7,55 (m,4h); 7,81 (s, $CH_3$); 8,25 (m,2H).

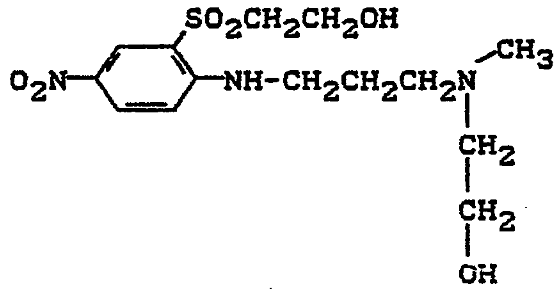

[5-Amino-2-(3′-(2″-hydroxyethyl)methylaminopropyl)-aminophenyl](2-hydroxyethyl)sulfon (Öl)

1H-NMR: τ = 3,13 (d,1H); 3,22 (dd,1H); 3,38 (d,1H); 4,58 (breites NH); 4,95-6,10 (breit, $NH_2$, 20H); 6,36 (t,2H); 6,52 (t,2H), 6,67 (t,2H); 6,92 (m,2H); 7,51 (m,2H); 8,27 (m,2H).

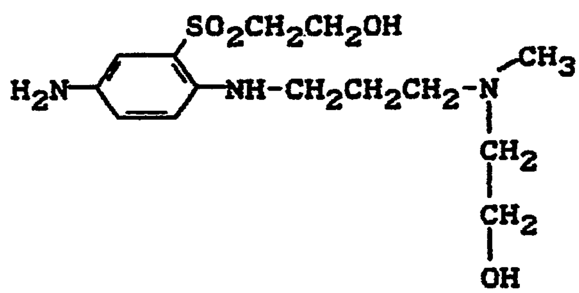

Beispiel 7

[2-(2-Hydroxpropyl)amino-5-nitrophenyl](2-hydroxyethyl)-sulfon (Schmelzpunkt 85°C)

1µH-NMR: τ = 1,65 (d,1H); 1,83 (dd,1H); 2,70 (t,NH); 3,02 (d,1H); 4,97 (t,OH); 5,12 (t,OH); 6,10 (m,1H); 6,23 (t,2H); 6,48 (t,2H); 4,60 4,80 (m,2H); 8,80 (d,3H).

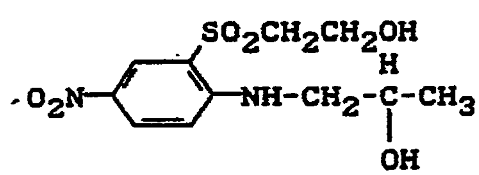

[5-Amino-2-hydroxpropyl)aminophenyl](2-hyroxyethyl)sulfon (Öl, das kristallisiert)

1H-NMR: τ = 3,08 (d,1H); 3,21 (dd,1H); 3,38 (d,1H); 4,41 (t,NH); 5,21 (breites m, $NH_2$, 20H); 6,15 (m,1H); 6,36 (t,2H); 6,63 (t,2H); 6,90, 7,10 (m,2H); 8,83 (d,3H);

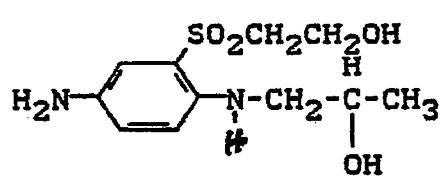

Beispiel 8

[5-Amino-2-2-hydroxy)ethoxyphenyl](2-hydroxyethyl)sulfon

136 g Natrium2-(hydroxy)ethoxy-5-nitrobenzolsulfinat werden in 250 ml Wasser gelöst. Der pH wird auf 7 bis 8 eingestellt. Das Reaktionsgefäß wird auf Dichtigkeit überprüft und mit Stickstoff gespült. Währendessen erwärmt man die Lösung auf 60°C. Das Reaktionsgefäß wird geschlossen und bei konstantem pH 7-9 werden innerhalb von 4-5 Stunden 110-120 g Ethylenoxid eingeleitet. Der pH wird durch kontinuierliche Zugabe von insgesamt 200 g 25 %iger Schwefelsäure konstant gehalten. Ist im Dünnschichtchromatogramm kein Ausgangssulfinat mehr nachweisbar, wird bei pH 7 eine Stunde auf 85°C erwärmt und die Apparatur anschließend mit Stickstoff gespült. Beim Abkühlen kristallisiert das blaßgelbe Reaktionsprodukt aus; es wird abgesaugt, mit wenig Wasser gewaschen und getrocknet.

Die Ausbeute an [2-(2-Hydroxy)-ethoxy-5-nitrophenyl](2-hydroxyethyl)-sulfon beträgt 132 g.

$^1$H-NMR: $\tau$ = 1,57 (d,1H); 1,65 (dd,1H); 2,32 (d,1H);
5,25 (breites s,2OH); 6,25 (m,4H);
6,78 (m,4H);

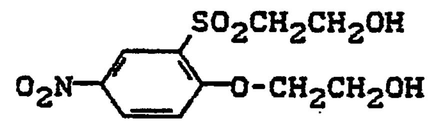

117 g [2-Hydroxy)ethoxy-5-nitrophenyl](2-hydroxyethyl)-sulfon werden in 250 ml Methanol gelöst, mit 5 g Raney-Nickel versetzt und auf 60°C erwärmt. Danach werden 34 l Wasserstoff aufgedrückt und bis Ende der Aufnahme die Temperatur bei 60°C konstant gehalten. Die abgekühlte Lösung wird vom Katalysator abgetrent und kann direkt mit Chloranil weiter umgesetzt werden. Zur Isolierung und Charakterisierung destilliert man das Lösungsmittel ab. Es bleiben 102 g [5-Amino-2-(2-hydroxy)ethoxyphenyl](2-hydroxyethyl)sulfon als zähes öl zurück.

$^1$H-NMR: $\tau$ = 2,64 (d,1H); 2,79 (d,1H); 3,12 (dd,1H);
4,32 (s,$NH_2$); 5,17 (breites OH); 5,28 (breites OH); 6,44 (m,4H); 6,62 (t,2H);
7,15 (t,2h).

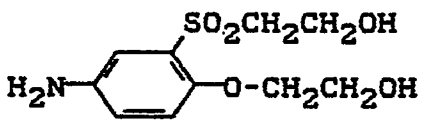

Beispiel 9

[5-Amino-2-(2-hydroxethyl)-mercaptophenyl](2-hydroxyethyl)sulfon

93 g (2-Chlor-5-nitrophenyl)(2-hydroxyethyl)sulfon werden in 200 ml Isopropanol mit 50 g fester Soda und 70 g Mercapoethanol für 6 Stunden unter Rückfluß erwärmt. Die Reaktionsmischung wird bei 50°C von den ausgefallenen Salzen abgetrennt. Die Lösung kann in dieser Forml direkt reduziert werden. Zur Isolierung engt man die Lösung am Rotationsverdampfer ein, behandelt den Rückstand mit 300 ml Wasser und saugt den kristallinen Niederschlag ab. Nach dem Trocknen erhält man 91 g [2-(2-Hydroxyethyl)mercapto-5-nitrophenyl](2-hydroxyethyl)sulfon vom Schmelzpunkt 109°C.

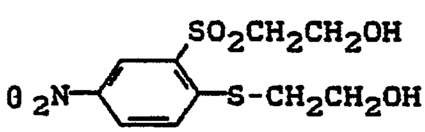

$^1$H-NHR: $\tau$ = 1,43 (d,1H); 1,63 (dd,1H); 2,12 (d,1H);
4,90 (t,OH); 5,19 (t,OH); 6,25 (m,6H);
6,67 (t,2H).

Obige Reaktionslösung wird mit 5 g Raney-Nickel versetzt und wie für die entsprechende Sauerstoffverbindung unter Beispiel 8 beschrieben mit Wasserstoff reduziert. Es werden 94 g [5-Amino-2-(2-hydroxyethyl)-mercaptophenyl](2-hydroxyethyl)sulfon als zähes, etwas dunkel gefärbtes Öl isoliert.

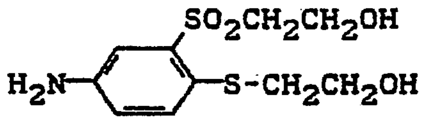

$^1$H-NHR: $\tau = 2.67$ (d,1H); 2.83 (d,1H); 3.25 (dd,1H); 4.34 (s.$NH_2$); 5.22 (breites s, 2OH); 6.32 (m,4H); 6.50 (t,2H); 7.07 (t,2H).

## Patentansprüche

1. Aminoverbindungen der allgemeinen Formel

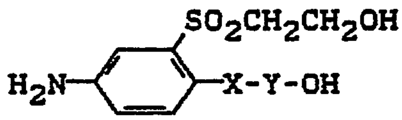

worin
worin
X = $NR_3$, O, S
$R_3$ = H, $C_1$-$C_4$-Alkyl
Y = $C_2$-$C_6$-Alkylen gegebenenfalls durch Heteroatome in der Alkylenkette unterbrochen.

2. Aminoverbindungen der Formel

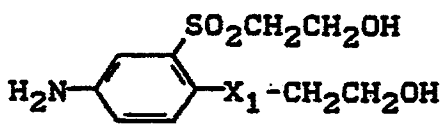

worin
$X_1$= NH, O, S.

3. Verfahren zur Herstellung der Aminoverbindungen des Anspruchs 1, dadurch gekennzeichnet, daß man in Nitroverbindungen der Formel

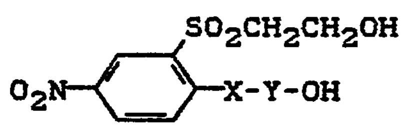

die Nitrogruppe zur Aminogruppe reduziert.

## Claims

1. Amino compounds of the general formula

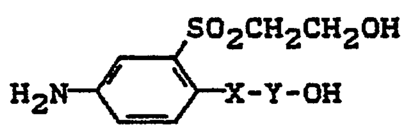

wherein
X = $NR_3$, O or S,
$R_3$ = H or $C_1$-$C_4$-alkyl,
Y = $C_2$-$C_6$-alkylene which is optionally interrupted in the alkylene chain by hetero atoms.

2. Amino compounds of the formula

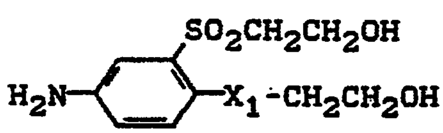

wherein
$X_1$ = NH, O or S.

3. Process for preparing the amino compounds of Claim 1, characterised in that the nitro group in nitro compounds of the formula

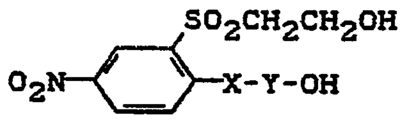

is reduced to an amino group.

**Revendications**

1. Dérivés aminés de formule générale

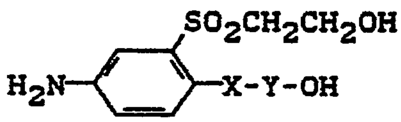

dans laquelle
X = $NR_3$, O, S,
$R_3$ = H, alkyle en $C_1$-$C_4$,
Y = alkylène en $C_2$-$C_6$ éventuellement interrompu dans la chaîne par des hétéroatomes.

2. Dérivés aminés de formule

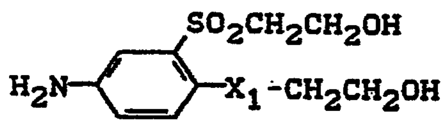

dans laquelle
$X_1$ = NH, O, S.

3. Procédé de préparation des dérivés aminés de la revendication 1, caractérisé en ce que, partant de dérivés nitrés de formule

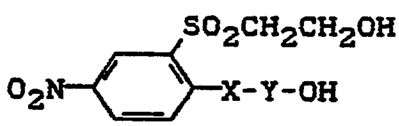

on réduit le groupe nitro en groupe amino.